# EUROPEAN PATENT APPLICATION

(11) **EP 4 825 667 A1**
(43) Date of publication of application: **21.10.2026**
(21) Application number: 24902318.5
(22) Date of filing: 08.10.2024
(51) Int. Cl.: B60R 19/26, B60R 19/34, B62D 21/15

(54) **VEHICLE FRONT COLLISION ENERGY TRANSFER SYSTEM AND VEHICLE**

(30) Priority: 13.12.2023 CN 202311712730
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: TU, Xurong, Ningbo, Zhejiang 315899 (CN); JIA, Jie, Ningbo, Zhejiang 315899 (CN)
(74) Representative: Boult Wade Tennant LLP
(86) International application number: PCT/CN2024/123471
(87) International publication number: WO 2025/123892

(57) **Abstract**

This disclosure provides a frontal impact energy transfer system for vehicles and a vehicle, and relates to but not limited to the technical field of automotive body architecture. The frontal impact energy transfer system for vehicles includes a front anti-impact beam assembly, a front longitudinal beam assembly, a reinforcing member, and connecting members, where the front anti-impact beam assembly includes an energy-absorbing box and a crossbeam, a first end of the energy-absorbing box is connected to the crossbeam, and a second end of the energy-absorbing box is inserted into the front longitudinal beam assembly; the reinforcing member is provided within the front longitudinal beam assembly, and the front longitudinal beam assembly and the energy-absorbing box are connected through the connecting member; and the energy-absorbing box is moved together with the crossbeam towards an inside of the front longitudinal beam assembly, such that the front longitudinal beam assembly and the second end of the energy-absorbing box abut against the reinforcing member. According to the present application, the second end of the energy-absorbing box is inserted into the front longitudinal beam assembly, and the reinforcing member is provided in the front longitudinal beam assembly. By means of the above configuration, the energy-absorbing box and the front longitudinal beam assembly form a surface contact structure along the moving direction of the crossbeam, thereby further improving the longitudinally structural stability and the energy absorption effect of the energy-absorbing box and the front longitudinal beam assembly.

## Description

The present application claims priority to the Chinese Patent Application No. 202311712730.X, filed with China National Intellectual Property Administration on December 13, 2023, entitled "Frontal Impact Energy Transfer System for vehicles and Vehicle". The aforementioned patent application is hereby incorporated by reference in its entirety.

### TECHNICAL FIELD

The present application relates to the technical field of vehicle body architecture, and in particular, to a frontal impact energy transfer system for vehicles and a vehicle.

### BACKGROUND

Currently, a vehicle's front-end protection system typically consists of a bumper skin, an energy-absorbing box, a front anti-impact beam, and a lower-leg protection beam. As a core component of both the vehicle's front-end protection system and the vehicle's body structure, the front anti-impact beam assembly not only plays a decisive role in determining whether the vehicle can be driven safely after low-speed impacts, but also serves the important function of energy absorption and force transmission during high-speed impacts.

In one technique, two end plates are provided at a connecting structure position between a front anti-impact beam assembly and a vehicle body's front longitudinal beam assembly, and these two end plates are connected together by bolts to achieve a fixed connection between the front anti-impact beam assembly and the vehicle body's front longitudinal beam assembly. The contact form between the end plates and longitudinal beam structures of the two assemblies is line contact, namely, the energy-absorbing box is in line contact with the end plate.

Therefore, the line contact structure introduces a possibility of radially bending of the energy-absorbing box at the line contact position. This leads to an instability at this position under axial crushing, which is not conducive to the energy-absorbing box absorbing impact energy along an axial direction.

### SUMMARY

The present application provides a frontal impact energy transfer system for vehicles and a vehicle, capable of enhancing the stability of axial collapse of the energy-absorbing box and improving its axial impact-energy absorption effect.

On one hand, the present application provides a frontal impact energy transfer system for vehicles, including a front anti-impact beam assembly, a front longitudinal beam assembly, a reinforcing member, and connecting members, where the front anti-impact beam assembly includes an energy-absorbing box and a crossbeam, a first end of the energy-absorbing box is connected to the crossbeam, and a second end of the energy-absorbing box is inserted into the front longitudinal beam assembly; the reinforcing member is provided within the front longitudinal beam assembly, and the front longitudinal beam assembly and the energy-absorbing box are connected through the connecting member; and the energy-absorbing box is moved together with the crossbeam towards an inside of the front longitudinal beam assembly, such that the front longitudinal beam assembly and the second end of the energy-absorbing box abut against the reinforcing member.

In one possible implementation, in the frontal impact energy transfer system for vehicles provided in the present application, the reinforcing member includes an abutting part and at least one connecting part, the connecting part is provided on one side of the abutting part, the connecting part is inserted into the second end of the energy-absorbing box, and the front longitudinal beam assembly, the connecting part and the energy-absorbing box are connected through connecting member, and the second end of the energy-absorbing box abuts against the abutting part.

In one possible implementation, in the frontal impact energy transfer system for vehicles provided in the present application, the connecting part is provided with at least one first mounting hole, the energy-absorbing box is provided with at least one second mounting hole, and one of the first mounting hole and the second mounting hole is a first elongated hole, while the other of the first mounting hole and the second mounting hole is a first through hole; an extension direction of the first elongated hole is consistent with a movement direction of the crossbeam; and the connecting member is inserted into the connecting part and the energy-absorbing box through the first elongated hole and the first through hole.

In one possible implementation, in the frontal impact energy transfer system for vehicles provided in the present application, at least two connecting parts are provided, and each connecting part has at least two first mounting holes.

In one possible implementation, in the frontal impact energy transfer system for vehicles provided in the present application, the front longitudinal beam assembly includes a longitudinal beam inner plate and a longitudinal beam outer plate; the longitudinal beam inner plate and the longitudinal beam outer plate are assembled together to form an accommodating cavity, the second end of the energy-absorbing box and the reinforcing member are located within the accommodating cavity; and the connecting member passes through the longitudinal beam inner plate, the energy-absorbing box, the connecting part, and the longitudinal beam outer plate, and a portion of the connecting member is located at an outer side of the longitudinal beam outer plate.

In one possible implementation, in the frontal impact energy transfer system for vehicles provided in the present application, the connecting member is connected to the abutting part.

In one possible implementation, in the frontal impact energy transfer system for vehicles provided in the present application, the abutting part is provided within the front longitudinal beam assembly, and the connecting part is connected to the front longitudinal beam assembly through the connecting member; and one of the front longitudinal beam assembly and the energy-absorbing box has at least one second elongated hole, and the other of the front longitudinal beam assembly and the energy-absorbing box has at least one second through hole, and an extension direction of the second elongated hole is consistent with a movement direction of the crossbeam.

In one possible implementation, in the frontal impact energy transfer system for vehicles provided in the present application, the energy-absorbing box includes an outer shell and at least two stiffening plates, the stiffening plates are provided within the outer shell, and each of the stiffening plates is connected to inner side walls of the outer shell, respectively; and the abutting part and the stiffening plates abut against each other.

In one possible implementation, in the frontal impact energy transfer system for vehicles provided in the present application, the front anti-impact beam assembly further includes a connecting bracket, and the first end of the energy-absorbing box is connected to the crossbeam through the connection bracket.

On the other hand, the present application provides a vehicle, including a vehicle body and a frontal impact energy transfer system for vehicles connected to the vehicle body, where the frontal impact energy transfer system for vehicles is the frontal impact energy transfer system for vehicles as described above.

The present application provides a frontal impact energy transfer system for vehicles and a vehicle, where the second end of the energy-absorbing box is inserted into the front longitudinal beam assembly, and a reinforcing member is provided within the front longitudinal beam assembly. The front longitudinal beam assembly and the energy-absorbing box are in fixed insertion connected through the connecting member, allowing them to form a surface contact structure along the movement direction of the crossbeam. This prevents the formation of an unstable line contact structure between the energy-absorbing box and the front longitudinal beam assembly, thereby enhancing the longitudinal structural stability between the energy-absorbing box and the front longitudinal beam assembly. This enables the energy-absorbing box to undergo full collapse and absorb energy along the movement direction of the crossbeam, and prevents the connection portion between the second end of the energy-absorbing box and the front longitudinal beam assembly from bending, thereby enhancing the stability of axial collapse of the structural connection between the front longitudinal beam assembly and the front anti-impact beam assembly. Furthermore, the provision of the reinforcing member further secures relative positions of the energy-absorbing box and the front longitudinal beam assembly, increasing structural strength at this location and improving energy absorption effect.

Upon perusal and comprehension of the accompanying drawings and detailed description, other aspects may become apparent. In addition to technical problems solved by embodiments of the present application described above, technical features constituting technical solutions, and beneficial effects resulting from these technical features of the technical solutions, other technical problems solved by the frontal impact energy transfer system for vehicles and vehicle provided by the embodiments of the present application, other technical features included in the technical solutions, and the beneficial effects resulting from these technical features will be further detailed in the specific embodiments.

### BRIEF DESCRIPTION OF DRAWINGS

To describe the technical solutions in embodiments of the present invention or in the prior art more clearly, the following briefly introduces the accompanying drawings needed for describing the embodiments or the prior art. Apparently, the accompanying drawings in the following description illustrate merely some embodiments of the present invention, and persons of ordinary skill in the art may still derive other drawings from these accompanying drawings without creative effort.
FIG. 1 is a schematic structural diagram of a frontal impact energy transfer system for vehicles provided by an embodiment of the present application.
FIG. 2 is a sectional view along A-A in FIG. 1.
FIG. 3 is a sectional view along B-B in FIG. 1.
FIG. 4 is a sectional view along C-C in FIG. 2.
FIG. 5 is schematic diagram of a frontal impact energy transfer system for vehicles in an impact state provided by an embodiment of the present application.
FIG. 6 is an enlarged schematic diagram of area D in FIG. 5.
FIG. 7 is a second sectional view along A-A in FIG. 1.
FIG. 8 is a second sectional view along B-B in FIG. 1.

### Reference signs:

100- front anti-impact beam assembly;
110- crossbeam; 111- connecting bracket;
120- energy-absorbing box; 121- stiffening plate;
130- reinforcing member; 131- first abutting part; 132- connecting part; 1321- first mounting hole; 132- second abutting part;
200- front longitudinal beam assembly; 210- longitudinal beam inner plate; 220- longitudinal beam outer plate;
300- connecting member;
400- impact object.

### DESCRIPTION OF EMBODIMENTS

To make the objectives, technical solutions, and advantages of embodiments of the present invention clearer, the following clearly and comprehensively describes the technical solutions in embodiments of the present invention with reference to the accompanying drawings in embodiments of the present invention. Apparently, the described embodiments are merely a cavity part rather than all cavities embodiments of the present invention. All other embodiments obtained by persons of ordinary skill in the art based on embodiments of the present invention without creative effort shall fall within the protection scope of the present invention. All such other embodiments obtained fall within the protection scope of the present invention. In the absence of conflict, the embodiments described below and the features in the embodiments may be combined with one another.

In the description of the present invention, it should be understood that orientation or positional relationships indicated by the terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are orientation or positional relationships based on the orientation or positional relationships shown in the accompanying drawings. These are provided solely for the purpose of facilitating the description of the present invention and simplifying the description, and are not intended to indicate or imply that the devices or elements referred to must have a specific orientation, be constructed in a specific orientation, or operated in a specific orientation. Therefore, they should not be construed as a limitation on the present invention.

In the present invention, unless otherwise explicitly specified and defined, terms such as "mounted", "linked", "connected" and "fixed" shall be interpreted broadly. For example, they may refer to fixed connection, detachable connection, or integral connection; they may refer to direct connection or indirect connection via intermediate media; and they may refer to communication between internal cavities of two components or interactive relationship between two components. For those skilled in the art, the specific meanings of the above terms in the context of the present invention can be understood based on specific circumstances.

It should be noted that in the description of the present invention, the terms "first", "second" and "third" are used solely for the convenience of describing different cavity components and should not be construed as indicating or implying any sequential relationship, relative importance, or the number of technical features indicated. Therefore, features defined with "first", "second" or "third" may explicitly or implicitly include at least one such feature.

In one technology, a vehicle's front-end protection system includes numerous structures such as a bumper skin, an energy-absorbing box, a front anti-impact beam, and a lower-leg protection beam. The front anti-impact beam (i.e., crossbeam) and energy-absorbing box, and other components form a front anti-impact beam assembly. The energy-absorbing box is positioned perpendicular to the crossbeam and is provided along the movement direction of the crossbeam when the crossbeam is subjected to a frontal impact.

Therefore, the front anti-impact beam assembly, on the one hand, plays a decisive role in determining whether the vehicle can be driven safely after low-speed impacts; on the other hand, serves the important function of energy absorption and force transmission during high-speed impacts. Therefore, the front anti-impact beam assembly is not only an important component of the vehicle's front-end protection system, but also an important component of the body structure.

Currently, when the energy-absorbing box of the front anti-impact beam assembly is connected to a vehicle body's front longitudinal beam assembly, two end plates are typically provided at connection structure positions, and the two end plates are connected together by bolts to achieve a fixed connection between the two describe above. However, since the contact form between the end plate and either the energy-absorbing box or the front longitudinal beam assembly is line contact, the contact portion between the end plate and the energy-absorbing box may bend in all four directions-up, down, left, and right, making the axial collapse at this position unstable and making the energy-absorbing box difficult to effectively absorb impact energy along the axial direction. Even during the absorption process, the energy absorbed by the front anti-impact beam assembly may drop sharply due to sudden bending or fracture of the contact portion.

The present application provides a frontal impact energy transfer system for vehicles and a vehicle. By employing an insertion connection between the front anti-impact beam assembly and the front longitudinal beam assembly, and providing a reinforcing member at the connection position, the stability of axial collapse of the energy-absorbing box is enhanced, thereby further improving energy absorption effect.

The following will provide a detailed description of the content of the present application in combination with the accompanying drawings, enabling those skilled in the art to have a clearer and more detailed understanding of the content of the present application.

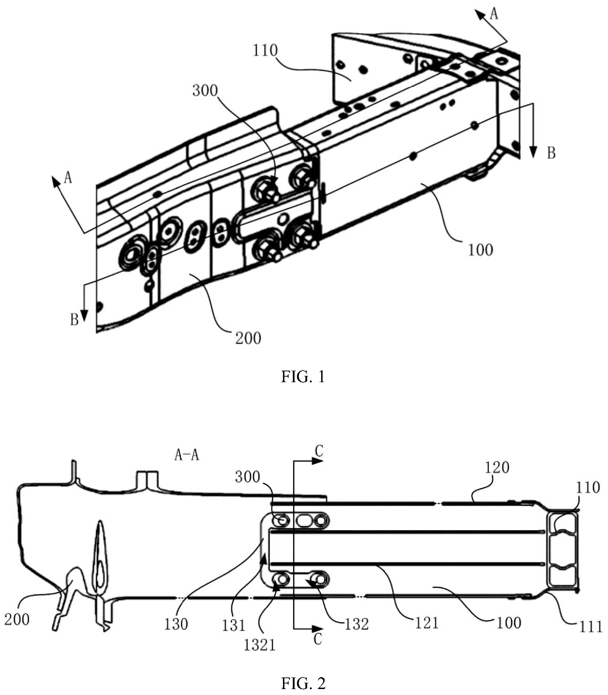

The embodiments of the present application first disclose a frontal impact energy transfer system for vehicles. The structure of the frontal impact energy transfer system for vehicles of the present application is described in detail below in combination with FIGS. 1-8.

As shown in FIG. 1, it should be noted that FIG. 1 illustrates a partial structure of a front longitudinal beam assembly 200 and a crossbeam 110. A frontal impact energy transfer system for vehicles of the present application includes a front anti-impact beam assembly 100 and a front longitudinal beam assembly 200. The front longitudinal beam assembly 200 is connected to the front anti-impact beam assembly 100 through a connecting member 300. The connecting member 300 may be a bolt; exemplarily, the connecting member 300 may be a hexagonal bolt, secured at one end by a nut.

As shown in FIG. 2, the frontal impact energy transfer system for vehicles further includes a reinforcing member 130. The reinforcing member 130 is provided within the front longitudinal beam assembly 200. The front anti-impact beam assembly 100 primarily includes an energy-absorbing box 120 and a crossbeam 110. An end of the energy-absorbing box 120 adjacent to the crossbeam 110 is designated as the first end, and the first end of the energy-absorbing box 120 is fixedly connected to the crossbeam 110. An end of the energy-absorbing box 120 adjacent to the front longitudinal beam assembly 200 is designated as the second end, and the second end of the energy-absorbing box 120 is inserted into an accommodating cavity of the front longitudinal beam assembly 200 by means of inserted connection.

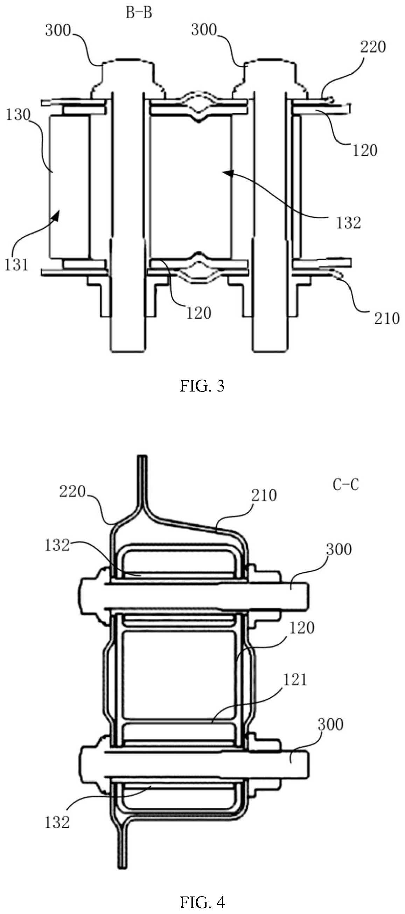

As shown in FIGS. 2 and 3, the front longitudinal beam assembly 200 and the energy-absorbing box 120 are connected through the connecting member 300, namely, the front longitudinal beam assembly 200 and the front anti-impact beam assembly 100 are connected through the connecting member 300. Furthermore, the energy-absorbing box 120 may be moved together with the crossbeam 110 in a direction toward the front longitudinal beam assembly 200, and further inserted into the accommodating cavity of the front longitudinal beam assembly 200, thereby fixing the relative positions of the front longitudinal beam assembly 200 and the reinforcing member 130, and causing the second end of the energy-absorbing box 120 to abut against the reinforcing member 130.

Therefore, in the frontal impact energy transfer system for vehicles provided by the present application, by inserting the second end of the energy-absorbing box 120 into the accommodating cavity of the front longitudinal beam assembly 200, and providing the reinforcing member 130 within the front longitudinal beam assembly 200, the energy-absorbing box 120 is driven to move towards the front longitudinal beam assembly 200, and abut against the reinforcing member 130, thereby limiting its position.

On the one hand, this arrangement allows the front longitudinal beam assembly 200 and the energy-absorbing box 120 to be in fixed insertion connection through the connecting member 300, and allows the front longitudinal beam assembly 200 and the energy-absorbing box 120 to form a surface contact structure along the movement direction of the crossbeam 110. This enhances the stability of the longitudinal structure between the energy-absorbing box 120 and the front longitudinal beam assembly 200, thereby reducing the possibility of bending or even fracturing of the energy-absorbing box 120 during an energy absorption process, and thus enabling the energy-absorbing box 120 to undergo full collapse and absorb energy along the movement direction of the crossbeam 110.

On the other hand, by providing the reinforcing member 130, the second end of the energy energy-absorbing box 120 may abut against the reinforcing member 130 when the energy-absorbing box 120 absorbs energy, thereby fixing the relative positions of the energy-absorbing box 120 and the front longitudinal beam assembly 200, and thus ensuring a smoother energy transfer. This prevents a sudden reduction in the distance between the relative positions of the energy-absorbing box 120 and the front longitudinal beam assembly 200, which could cause a sudden reduction in the energy absorbed by the longitudinal structure. Ultimately, this enhances the structural strength and energy absorption effect at this location.

As shown in FIG. 2, in some embodiments, the reinforcing member 130 consists of a first abutting part 131 and at least one connecting part 132. The connecting part 132 is provided on one side of the first abutting part 131 and is perpendicular to the first abutting part 131.

In a specific assembly, the connecting part 132 is inserted into the second end of the energy-absorbing box 120. As shown in FIG. 3, the front longitudinal beam assembly 200, the connecting part 132 and the energy-absorbing box 120 are all connected through a same set of connecting members 300. Moreover, after the energy-absorbing box 120 is moved, the second end of the energy-absorbing box 120 specifically abuts against the first abutting part 131 of the reinforcing member 130.

Optionally, as shown in FIGS. 2 and 3, the connecting part 132 of the reinforcing member 130 is provided with at least one first mounting hole 1321; the energy-absorbing box 120 is provided with at least one second mounting hole at a corresponding position; the front longitudinal beam assembly 200 is provided with at least one third mounting hole at a corresponding position; and the first mounting hole 1321, the second mounting hole, and the third mounting hole are provided in correspondence with each other. That is, one first mounting hole 1321 corresponds to one second mounting hole and one third mounting hole.

Moreover, one of the first mounting hole 1321 and the second mounting hole is set as a first elongated hole, while the other of the first mounting hole 1321 and the second mounting hole is set as a first through hole. Optionally, the first mounting hole 1321 may be set as the first elongated hole, and the second mounting hole may be set as the first through hole. An extension direction of the first elongated hole is consistent with a movement direction of the crossbeam 110, facilitating the movement of the energy-absorbing box 120 relative to the connecting member 300.

As shown in FIG. 4, the connecting member 300 is inserted into the connecting part 132 of the reinforcing member 130 and the energy-absorbing box 120 through the first elongated hole and the first through hole respectively, and is further inserted into the front longitudinal beam assembly 200, to achieve the fixing of the reinforcing member 130, the energy-absorbing box 120, and the front longitudinal beam assembly 200 by using the connecting member 300.

In some embodiments, the first mounting hole 1321 may be set as a first through hole, and the second installation hole may be set as a first elongated hole. This will not affect the relative displacement relationship between the reinforcing member 130 and the energy-absorbing box 120. Moreover, the third mounting hole in the front longitudinal beam assembly 200 may be set as a through hole identical to the first through hole, or an elongated hole identical to the first elongated hole, depending on specific requirements.

During a specific implementation, the connection part 132 on the reinforcing member 130 is at least two in number, which may be two herein, and two connection parts 132 may be respectively located at two ends of the same side of the first abutment part 131 of the reinforcing member 130. At least two first installation holes 1321 are provided on the same connection part 132. Herein, two first installation holes 1321 may be provided to give a more stable and reliable connection between the front longitudinal beam assembly 200 and the front anti-impact beam assembly 100.

In some embodiments, three connecting parts 132 may be provided. The three connecting parts 132 may be provided sequentially on the same side of the first abutting part 131. The specific number of the connecting part 132 may be selected according to the vehicle's working conditions, and is not limited in the embodiments.

When four or more first mounting holes 1321 are provided, in order to shorten the length of the connecting part 132, the first mounting holes 1321 may also be arranged side by side, thereby making the structure of the connecting part 132 more compact. Correspondingly, the energy-absorbing box 120 should provide with second mounting holes matching the number and position of the first mounting holes 1321, and similarly, the front longitudinal beam assembly 200 should provide with third mounting holes matching the number and position of the first mounting holes 1321.

Optionally, the front longitudinal beam assembly 200 is a structure formed by assembling two plate members, including a longitudinal beam inner plate 210 and a longitudinal beam outer plate 220. The longitudinal beam inner plate 210 and the longitudinal beam outer plate 220 are assembled to form an accommodating cavity. The accommodating cavity is configured to accommodate the second end of the energy-absorbing box 120 and the reinforcing member 130. Therefore, as shown in FIG. 4, the connecting member 300 actually passes through the longitudinal beam inner plate 210, one side wall of the energy-absorbing box 120, the connecting part 132 of the reinforcing member 130, the other side wall of the energy-absorbing box 120, and the longitudinal beam outer plate 220 sequentially. After the connecting member 300 is fully inserted, a portion of the connecting member 300 protrudes beyond the outer side of the longitudinal beam outer plate 220, to allow a nut to be screwed onto the protruding portion, thereby securing the entire structure. In some embodiments, the insertion direction of the connecting member 300 may be reversed, and thus the connecting member 300 is inserted from longitudinal beam outer plate 220 and protrudes through the longitudinal beam inner plate 210.

Optionally, as shown in FIGS. 2, 3, and 4, the connecting part 132 of the reinforcing member 130 may be directly connected to the first abutting part 131, which may be achieved by means of welding, fasteners, or integral molding.

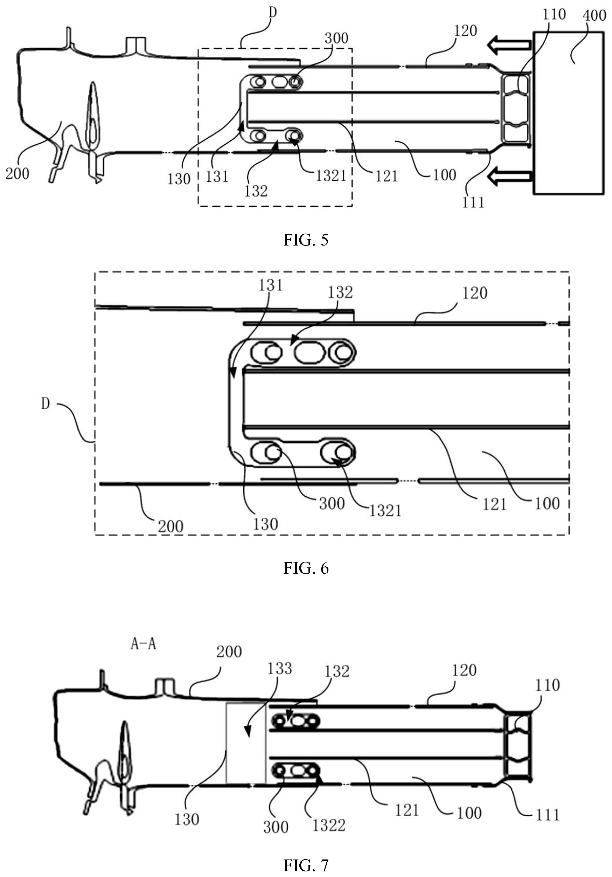

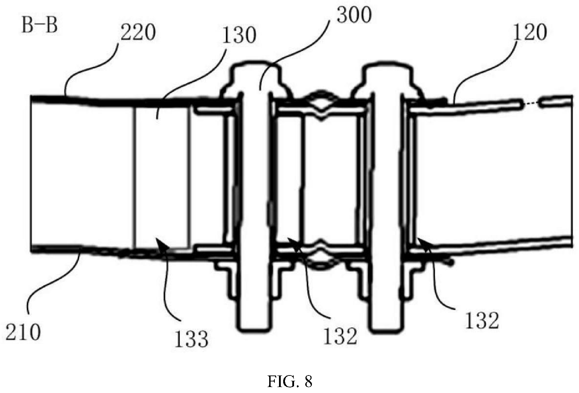

In addition, optionally, as shown in FIGS. 7 and 8, the connecting part 132 of the reinforcing member 130 and the second abutting part 133 may also be disconnected from each other. Moreover, the second abutting part 133 consists of a bumper block, and is fixedly mounted within the accommodating cavity of the front longitudinal beam assembly 200, and may similarly abut against the energy-absorbing box 120 during the movement of the energy-absorbing box 120. The connecting part 132 remains connected to the front longitudinal beam assembly 200 through the connecting member 300. Correspondingly, one of the front longitudinal beam assembly 200 and the energy-absorbing box 120 is provided with at least one second elongated hole, while the other of the front longitudinal beam assembly 200 and the energy-absorbing box 120 is provided with at least one second through hole, and the extension direction of the second elongated hole is consistent with the movement direction of the crossbeam 110.

In some embodiments, the third mounting hole of the front longitudinal beam assembly 200 may be set as a second elongated hole, and the second mounting hole on the energy-absorbing box 120 may be set as a second through hole, or the second elongated hole and the second through hole may be interchanged. Furthermore, the first mounting hole 1321 in the connecting member 300 may similarly be set as a through hole identical to the second through hole.

Optionally, the energy-absorbing box 120 includes an outer shell and at least two stiffening plates 121. Two stiffening plates 121 may be provided herein. The outer shell forms a main body of the energy-absorbing box 120. All the second mounting holes are provided in two opposite side walls of the outer shell. The extended length of each of the two stiffening plates 121 is consistent with the extended length of the outer shell. Each of the two stiffening plates 121 is connected to the two opposite inner-side walls of the outer shell, and the two opposite inner-side walls are the side walls where the second mounting holes are provided. Meanwhile, each of the two stiffening plates 121 abuts against either the first abutting part 131 or the second abutting part 133 of the reinforcing member 130.

Two side-wall inner plates are provided with equal spacing within the outer shell, ensuring the consistency of the spacing between the stiffening plate 121 and stiffening plate 121 and the spacing between the stiffening plate 121 and the side wall provided with no second installation hole. This spacing is no greater than the distance between the two connecting parts 132 of the reinforcing member 130. This arrangement, on the one hand, allows each of the connecting parts 132 to extend into the spacing between the stiffening plate 121 and the side wall provided with no second installation hole, and on the other hand ensures that both stiffening plates 121 may effectively abut against either the first abutting part 131 or the second abutting part 133 of the reinforcing member 130.

In some embodiments, the number of the stiffening plate 121 may be increased according to specific application requirements. For example, one or two additional stiffening plates 121 may be added between the existing two stiffening plates 121 to enhance the abutting effect of the stiffening plates 121 against either the first abutting part 131 or the second abutting part 133.

Optionally, the front anti-impact beam assembly 100 further includes a connecting bracket 111. The first end of the energy-absorbing box 120 may be stably and reliably connected to the crossbeam 110 through the connecting bracket 111. Specifically, the first end of the energy-absorbing box 120 may be connected to the connecting bracket 111 by means of rivets, bolts, or welding, and the connecting bracket 111 may be connected to the crossbeam 110.

The specific energy transfer process of the frontal impact energy transfer system for vehicles will be described below in combination with FIGS. 5 and 6.

As shown in FIG. 5, when the crossbeam 110, which spans the entire vehicle transversely, is impacted by an external impact object 400 in the impact direction indicated by arrows, the crossbeam 110 is moved in that direction, and absorbs part of the impact energy while simultaneously transfers the impact energy to the energy-absorbing box 120 through the connecting bracket 111.

As shown in FIG. 6, upon receiving the impact energy, the energy-absorbing box 120 is moved backward together with the crossbeam 110, and pushes against and moves the reinforcing member 130 backward together. When they move to the first elongated hole or the second elongated hole's limiting position, they further contact and tightly abut against the connecting member 300.

After the energy-absorbing box 120 and the reinforcing member 130 tightly abut against the connecting member 300, the connecting member 300 may not only prevent both components from moving further backward, but also cause the energy-absorbing box 120 and the first abutting part 131 of the reinforcing member 130 to abut against each other and achieve self-locking. Eventually, many components such as the crossbeam 110, the energy-absorbing box 120, the connecting member 300, the reinforcing member 130, and the front longitudinal beam assembly 200 form a solid integrated structure, thereby absorbing the impact energy from the impact object 400 more stably.

During the aforementioned impact process, thanks to the insertion installation between the front anti-impact beam assembly 100 and front longitudinal beam assembly 200, the longitudinal structural stability of the entire vehicle framework is reinforced, allowing the energy-absorbing box 120 to undergo full longitudinal collapse and absorb the impact energy. Furthermore, the self-locking structure formed by the mutual abutment between the energy-absorbing box 120 and the reinforcing member 130 effectively limits the relative position between the energy-absorbing box 120 and the front longitudinal beam assembly 200, thereby allowing them to form a solid integrated structure. This ensures a smoother energy transfer and prevents a sudden drop in energy absorbed by the longitudinal structure.

An embodiment of the present application further discloses a vehicle, including a vehicle body, and the frontal impact energy transfer system for vehicles, which is provided in any one of the above embodiments, connected to the vehicle body.

Where, the structure and working principle of the frontal impact energy transfer system for vehicles are described in detail in the above-mentioned embodiments, which will not be repeated here.

It is understandable that the vehicle body further includes other structures such as a suspension apparatus, a front axle, a rear axle, which are used to support the frontal impact energy transfer system for vehicles and other longitudinal beam and crossbeam structures on the wheels.

The vehicle provided by the embodiments of the present application includes a frontal impact energy transfer system. The frontal impact energy transfer system includes a front anti-impact beam assembly 100, a front longitudinal beam assembly 200, a reinforcing member 130, and a connecting member 300; where the front anti-impact beam assembly 100 includes an energy-absorbing box 120 and a crossbeam 110; a first end of the energy-absorbing box 120 is connected to the crossbeam 110, and a second end of the energy-absorbing box 120 is inserted into the front longitudinal beam assembly 200; the reinforcing member 130 is provided within the front longitudinal beam assembly 200, and the front longitudinal beam assembly 200 and the energy-absorbing box 120 are connected through the connecting member 300; and the energy-absorbing box 120 is moved together with the crossbeam 110 towards an inside of the front longitudinal beam assembly 200, such that the second end of the energy-absorbing box 120 abuts against the reinforcing member 130.

With the above arrangement, on the one hand, the front longitudinal beam assembly 200 and the energy-absorbing box 120 are in fixed insertion through the connecting member 300, and form a surface contact structure along the movement direction of the crossbeam 110, preventing the formation of an unstable line-contact structure between the energy-absorbing box 120 and the front longitudinal beam assembly 200, and thus enhancing the longitudinal structural stability between the energy-absorbing box 120 and the front longitudinal beam assembly 200. This enables the energy-absorbing box 120 to undergo full collapse and absorb energy along the movement direction of the crossbeam 110, and prevents the connection portion between the second end of the energy-absorbing box 120 and the front longitudinal beam assembly 200 from bending. With the above arrangement, on the other hand, the provision of the reinforcing member 130 ensures that the second end of the energy-absorbing box 120 abuts against the reinforcing member 130 when the energy-absorbing box 120 absorbs energy, fixing the relative positions of the energy-absorbing box 120 and the front longitudinal beam assembly 200, and thus ensuring a smoother energy transfer. This prevents a sudden change in their relative positions that could cause a sudden reduction in the energy absorbed by the longitudinal structure, and ultimately enhances structural strength and energy absorption efficiency at this location.

Finally, it should be noted that the above embodiments are provided merely for describing the technical solutions of the present application other than limiting the present application. Although the present application has been described in detail with reference to the aforementioned embodiments, those skilled in the art should understand that they may still make modifications to the technical solutions described in the aforementioned embodiments, or make equivalent substitutions to some or all of the technical features. Such modifications or substitutions do not cause the corresponding technical solutions to depart from the scope of the technical solutions of embodiments of the present application.

## Claims

1. A frontal impact energy transfer system for vehicles, comprising a front anti-impact beam assembly, a front longitudinal beam assembly, a reinforcing member, and a connecting member, wherein the front anti-impact beam assembly comprises an energy-absorbing box and a crossbeam, a first end of the energy-absorbing box is connected to the crossbeam, and a second end of the energy-absorbing box is inserted into the front longitudinal beam assembly;
the reinforcing member is provided within the front longitudinal beam assembly, and the front longitudinal beam assembly and the energy-absorbing box are connected through the connecting member;
the energy-absorbing box is moved together with the crossbeam towards an inside of the front longitudinal beam assembly, such that the front longitudinal beam assembly and the second end of the energy-absorbing box abut against the reinforcing member.

2. The frontal impact energy transfer system for vehicles according to claim 1, wherein the reinforcing member comprises an abutting part and at least one connecting part, the connecting part is provided on one side of the abutting part, the connecting part is inserted into the second end of the energy-absorbing box, and the front longitudinal beam assembly, the connecting part and the energy-absorbing box are connected through connecting member;
the second end of the energy-absorbing box abuts against the abutting part.

3. The frontal impact energy transfer system for vehicles according to claim 2, wherein the connecting part is provided with at least one first mounting hole, the energy-absorbing box is provided with at least one second mounting hole, and one of the first mounting hole and the second mounting hole is a first elongated hole, while the other of the first mounting hole and the second mounting hole is a first through hole;
an extension direction of the first elongated hole is consistent with a movement direction of the crossbeam;
the connecting member is inserted into the connecting part and the energy-absorbing box through the first elongated hole and the first through hole.

4. The frontal impact energy transfer system for vehicles according to claim 3, wherein at least two connecting parts are provided, and each connecting part has at least two first mounting holes.

5. The frontal impact energy transfer system for vehicles according to claim 4, wherein the front longitudinal beam assembly comprises a longitudinal beam inner plate and a longitudinal beam outer plate; the longitudinal beam inner plate and the longitudinal beam outer plate are assembled together to form an accommodating cavity, and the second end of the energy-absorbing box and the reinforcing member are located within the accommodating cavity;
the connecting member passes through the longitudinal beam inner plate, the energy-absorbing box, the connecting part, and the longitudinal beam outer plate, and a portion of the connecting member is located at an outer side of the longitudinal beam outer plate.

6. The frontal impact energy transfer system for vehicles according to claim 5, wherein the connecting member is connected to the abutting part.

7. The frontal impact energy transfer system for vehicles according to claim 2, wherein the abutting part is provided within the front longitudinal beam assembly, and the connecting part is connected to the front longitudinal beam assembly through the connecting member;
one of the front longitudinal beam assembly and the energy-absorbing box has at least one second elongated hole, and the other of the front longitudinal beam assembly and the energy-absorbing box has at least one second through hole, and an extension direction of the second elongated hole is consistent with a movement direction of the crossbeam.

8. The frontal impact energy transfer system for vehicles according to any one of claims 2 to 7, wherein the energy-absorbing box comprises an outer shell and at least two stiffening plates, the stiffening plates are provided within the outer shell, and each of the stiffening plates is connected to inner side walls of the outer shell, respectively;
the abutting part and the stiffening plates abut against each other.

9. The frontal impact energy transfer system for vehicles according to claim 8, wherein the front anti-impact beam assembly further comprises a connecting bracket, and the first end of the energy-absorbing box is connected to the crossbeam through the connection bracket.

10. A vehicle, comprising a vehicle body and a frontal impact energy transfer system for vehicles connected to the vehicle body, wherein the frontal impact energy transfer system for vehicles is the frontal impact energy transfer system for vehicles according to any one of claims 1 to 9.
